# FASCICULE DE BREVET EUROPEEN

(11) **EP 2 000 929 B1**
(45) Date de publication et mention de la délivrance du brevet: **01.08.2012**
(21) Numéro de dépôt: 08103703.8
(22) Date de dépôt: 24.04.2008
(51) Int. Cl.: G06F 17/30, H04L 29/06

(54) **Utilisation d'un arbre de hachage à préfixes (PHT) pour la localisation des services au sein d'un réseau de communication poste-à-poste**
Verwendung eines Prefix Hash Trees (PHT) zur Lokalisierung von Diensten innerhalb eines Punkt-zu-Punkt-Kommunikationsnetzes
Use of a prefix hash tree (PHT) to locate services within a peer-to-peer communication network

(30) Priorité: 08.06.2007 FR 0755592
(43) Date de publication de la demande: 10.12.2008
(73) Titulaire: Alcatel Lucent, 75007 Paris (FR)
(72) Inventeur: Froment, Thomas, 91310, LONGPONT SUR ORGE (FR); Wauthy, Jean-François, 5000, Namur (BE)
(74) Mandataire: Sciaux, Edmond

(56) Documents cités:
- RAMABHADAN S ET AL: "Prefix Hash Tree: an indexing data structure over Distributed Hash Tables" TECHNICAL REPORT, [Online] février 2004 (2004-02), XP002467877 Extrait de l'Internet: URL:http://berkeley.intel-research.net/syl via/pht.pdf> [extrait le 2008-02-05]
- BRYAN D ET AL: "dSIP: A P2P Approach to SIP Registration and Resource Location; draft-bryan-p2psip-dsip-00.txt" IETF STANDARD-WORKING-DRAFT, INTERNET ENGINEERING TASK FORCE, IETF, CH, 25 février 2007 (2007-02-25), XP015048833 ISSN: 0000-0004
- COOPER P MATTHEWS AVAYA D BRYAN B LOWEKAMP SIPEERIOR TECHNOLOGIES AND COLLEGE OF WILLIAM AND MARY E: "NAT Traversal for dSIP; draft-matthews-p2psip-dsip-nat-traversal-0 0.txt" IETF STANDARD-WORKING-DRAFT, INTERNET ENGINEERING TASK FORCE, IETF, CH, 25 février 2007 (2007-02-25), XP015050190 ISSN: 0000-0004

## Description

La présente invention est relative au domaine des réseaux de communication poste-à-poste ou pair-à-pair (pour « peer-to-peer », en langue anglaise). Plus particulièrement, elle concerne la localisation d'un service au sein d'un tel réseau poste-à-poste.

Les réseaux de communication poste-à-poste se sont peu à peu imposés comme des alternatives efficaces pour certains types de service. La société Skype a par exemple bâtie son succès sur un modèle poste-à-poste pour l'établissement de session de communication de type voix sur IP (VoIP) ou multimédia sur IP.
D'autres services d'échange de contenu se basent également sur des technologies poste-à-poste, tels les réseaux eMule, Bittorrent, JXTA...
Le principe fondateur d'un réseau poste-à-poste réside dans l'absence d'organe centralisé : la logique du service est distribuée sur l'ensemble des éléments du réseau poste-à-poste ; chaque élément pouvant potentiellement être à la fois client (demandeur d'un service) et serveur (fournisseur d'un service).

Beaucoup des réseaux poste-à-poste sont basés sur une table de hachage distribuée.
Une table de hachage distribuée (ou DHT pour *« Distributed Hash* Table » en langue anglaise) est une technologie permettant la mémorisation et la récupération d'une information dans un système massivement réparti comme un réseau poste à poste (ou « peer to peer *network* » en langue anglaise). Par principe, le contenu de la table de hachage est réparti sur l'ensemble des postes ou noeuds du réseau et il n'y aucun dispositif centralisé.

De telles tables de hachage distribuées sont par exemple décrits dans l'article « Looking up Data in P2P Systems » de H. Balakrishna, F. Kaashoek, D. Karger, R. Morris et 1. Stoica, paru en février 2003, dans la revue Communications of the ACM, vol. 46, no. 2.

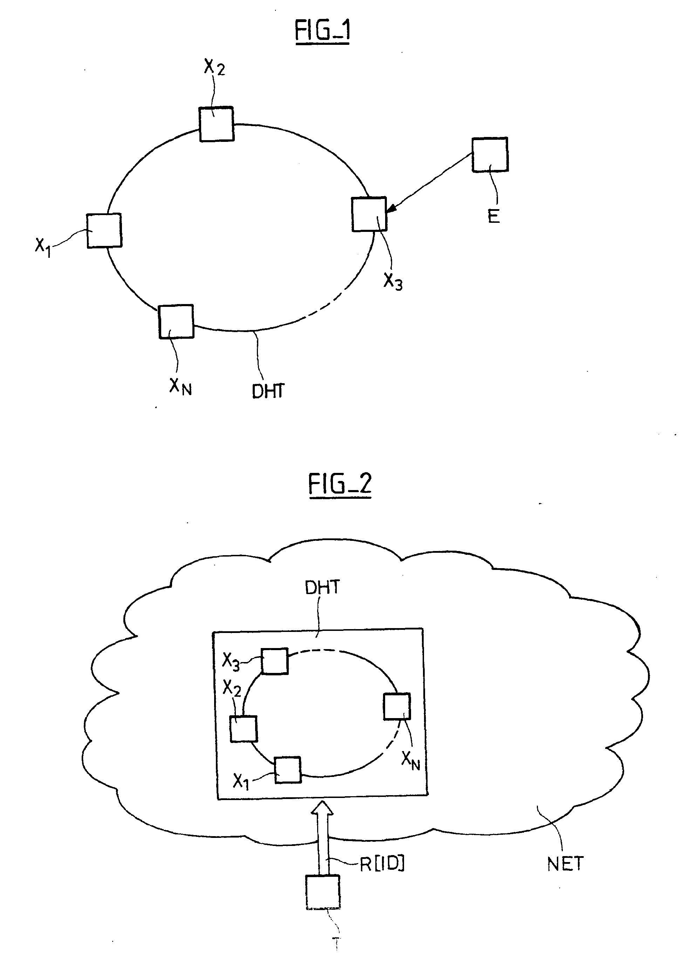

La figure 1 illustre une table de hachage distribuée DHT composé de noeuds X₁, X₂, X₃... X_{N}.
Une information est mémorisée au sein du réseau DHT en lui associant une clé K et en appliquant une fonction de hachage H sur cette clé. La valeur H(K) détermine un indice qui permet de repérer un noeud particulier au sein du réseau (par exemple, le noeud d'indice i le plus proche, ou immédiatement inférieur...).
Le même processus peut être mis en oeuvre afin de récupérer une information.
Les mécanismes de mémorisation et de récupération d'information sont expliqués plus avant dans de nombreuses publications sur le sujet à la disposition de l'homme du métier. Ils seront en outre un peu plus explicités dans la suite de la description.
Il importe ici de remarquer le caractère totalement distribué de la mémorisation, et le fait que l'on peut ainsi projeter l'espace des informations à mémoriser dans un espace de mémorisation formé des N noeuds.

Les arbres binaires de type PHT sont connus de Ramabhadran, S et al: "Prefix Hash Tree - An Indexing Data Structure over Distributed Hash Tables".

Cet aspect distribué est intéressant à plus d'un titre pour les architectures de réseau de communication et les applications de type voix sur IP (VoIP)/Multimédia sur IP (Internet Protocol).
Il permet en effet de s'affranchir de certaines lourdeurs des systèmes centralisés : l'hypertrophie du système centralisé dès lors que le nombre d'abonnés au service est important ; la nécessité et la complexité de sa maintenance ; la gestion de ses pannes et de son indisponibilité etc.

Le succès remporté au fil du temps par les architectures poste-à-poste a poussé l'IETF *(Internet Engineering Task* Force) à se pencher sur la définition d'une architecture particulière pour les services basés sur le protocole SIP *(Session Initiation* Protocol).
Le protocole SIP est défini par le RFC 3261 de l'IETF et est conçu pour véhiculer la signalisation nécessaire à la négociation et à l'établissement de sessions multimedias sur des réseaux de communication de données basés sur le protocole IP *(Internet Protocol).* comme, par exemple, l'Internet draft "dSIP: A P2P Approach to SIP Registration and Resource Location", draft-bryan-p2psip-dsip-00.
Ces travaux sont actuellement pris en charge par le groupe de travail P2P-SIP (pour *« peer-to-peer* SIP »).

Le protocole SIP nécessite un certain nombre de services (le *« Registrar* » par exemple) qui peuvent être implémentés par une table de hachage distribuée plutôt que par un serveur centralisé.
Ces services peuvent également être
- STUN (« *Simple Traversal* of *User datagram protocol (UDP) through Network address translators (NATs)* »), défini par le RFC 3489
- TURN («*Traversal Using Relay NAT* »), publié en septembre 2005 avec le statut de « draft IETF » sous le nom « draff-rosenbergmidcom-turn-08.txt »
- un relais média,
- un service de présence, etc.

Ces services peuvent être fournis par un ou plusieurs noeuds de la table de hachage distribué, mais il se pose le problème de leur localisation par les clients SIP, ou autres éléments de réseau.

Plusieurs possibilités de solutions ont été évoquées dans les discussions des groupes de travail de l'IETF.

Une première approche consiste à utiliser un serveur centralisé unique ayant pour but de maintenir des associations entre les services et les adresses des serveurs les fournissant. Ce serveur aurait une adresse bien déterminée afin que les clients puissent le contacter aisément. De cette façon, un client recherchant un serveur STUN lui enverrait une requête de service contenant « STUN » comme paramètre et recevrait une liste d'adresses, chaque adresse correspondant à un noeud de la table de hachage distribuée fournissant ce service.
Cette première approche n'est toutefois pas satisfaisante dans la mesure où elle introduit un serveur centralisé contraire à la philosophie même d'un réseau poste-à-poste. Les inconvénients des approches centralisées, cités précédemment, et ayant poussé à l'élaboration et au succès des approches poste-à-poste, s'appliquent donc également ici et notamment le fait que ce serveur devient un point de faiblesse de l'architecture : en cas de défaillance, les clients ne pourront plus localiser les serveurs (noeuds) fournissant les services recherchés. En outre, ce serveur centralisé forme une cible privilégiée pour des attaques malfaisantes de type Déni de service (DOS, pour « Denial of service »).

L'alternative consiste donc à mémoriser les informations de localisation dans la table de hachage distribuée elle-même.
Une première solution conforme à cette approche consiste à associer une clé à l'ensemble des informations de localisation. Cette idée a été soumise dans le forum virtuel (ou liste de diffusion, « mailing list » en langue anglaise) du groupe de travail P2P SIP de l'IETF en décembre 2006.
Mais elle souffre un certain nombre d'inconvénients. Notamment, si le nombre de services et le nombre de noeuds de la table de hachage distribuée sont importants, les informations de localisation peuvent devenir volumineuses.

Cela peut poser des problèmes de dimensionnement du noeud qui a la charge de cette information : Selon le principe même d'une table de hachage distribuée, il n'y a pas de contrôle possible sur quel noeud a la charge d'une information donnée car la table s'autogère. Aussi, les informations de localisation peuvent être gérées par un noeud de capacité limitée, par exemple un client de communication dans le cas d'une architecture où les clients font parties de la table de hachage distribuée.
À ce premier problème de mémorisation vient se rajouter aussi l'inconvénient que ce noeud devient l'objet de l'ensemble des requêtes de service. Cela crée donc un point de surcharge au sein du réseau de communication.

Une seconde solution consiste à définir des informations de localisation différentes pour chaque instance de service. Par exemple, on peut définir un préfixe pour chaque service et lui ajouter un numéro d'indice de l'instance, afin de former la clé de l'information de localisation. On peut ainsi obtenir une clé « STUN1 » (associée à une information de localisation contenant au moins l'adresse IP d'un premier serveur fournissant le service STUN), une clé « TURN5 » (associée à une information de localisation contenant au moins l'adresse IP d'un cinquième serveur fournissant le service TURN), etc.
Mais il se pose alors le problème de fournir au client de communication l'information sur les clés disponibles (Quels sont les services disponibles ? Quels indices sont possibles pour chacun des services ?).
Comme une table de hachage distribuée ne peut accepter que des requêtes « exactes », c'est-à-dire une recherche d'une clé précisément déterminée, la recherche de l'information de localisation nécessite plusieurs requêtes successives afin que le client dispose de l'ensemble des informations de localisation relatives à un service donné (« STUN » par exemple).
En outre, cette façon de faire gère très mal l'aspect dynamique d'une table de hachage distribuée : lorsque le client a reçu l'information de localisation du dernier serveur fournissant le service demandé, peut-être d'autres se seront connectés sur la table, ou certains se seront au contraire déconnectés. Il devient du coup impossible pour le client d'avoir des informations à jour.

Le but de la présente invention est de proposer une solution de localisation d'un ensemble de serveurs fournissant un service requis.

Un premier objet de l'invention est un réseau de communication comportant une table de hachage distribuée dont les noeuds fournissent des services accessibles à des clients de communication adaptés pour communiquer selon le protocole SIP connectés au réseau de télécommunication. La table de hachage distribuée dispose :
- de moyens pour recevoir une requête en localisation de service de la part d'un élément de réseau, cette requête contenant au moins un identifiant d'un service, et
- des moyens de recherche pour rechercher au sein de la table de hachage distribuée au moins une information de localisation, et la ou les transmettre à l'élément de réseau.

Chacune de ces informations de localisation correspond à un noeud fournissant le service qui est déterminé par l'identifiant de service.

Le réseau de communication selon l'invention se caractérise en ce que
- la table de hachage est organisée de sorte que les informations de localisation sont associées à des clés contenant au moins un identifiant de service et correspondant à des feuilles d'un arbre binaire de type PHT dont les étiquettes des noeuds sont distribuées au sein de la table de hachage distribuée, et
- en ce que les moyens de recherche sont adaptés pour rechercher les informations de localisation dans tout ou partie des feuilles dont l'étiquette est préfixe de l'identifiant de service contenu dans la requête de service, et les transmettre à l'élément de réseau.

Ce client de communication peut être un terminal de communication.
Les étiquettes et les clés peuvent être des mots binaires, les étiquettes étant formées de sorte que le poids de chaque bit dans l'ordre décroissant correspond à une profondeur croissante au sein de l'arbre binaire.
Les services en question peuvent par exemple être des services STUN et/ou TURN et/ou conformes au RFC 3489bis de l'IETF.
Le noeud fournissant le service peut être un des noeuds de la table de hachage distribuée. Il peut donc aussi s'agir d'un noeud extérieur à la table de hachage distribuée.
Selon une mise en oeuvre de l'invention, les étiquettes peuvent être composées au moins de l'identifiant de service, d'une indication du protocole de transport, d'une information de localisation et d'un port. L'information de localisation peut notamment être une adresse IP.
Ces étiquettes peuvent également comporter tout ou partie des paramètres définissant un identifiant universel de ressources URI conforme au RFC 1630 de l'IETF.

L'invention a également comme objet un procédé permettant à un client de communication adapté pour communiquer selon le protocole SIP d'accéder à un service fourni par une table de hachage distribuée. Ce procédé comporte
- une étape de transmission d'une requête en localisation de service, cette requête contenant un identifiant du service ; et
- une étape de recherche par la table de hachage distribuée d'au moins une information de localisation, chacune de ces informations de localisation correspondant à un noeud fournissant le service.
   Le procédé selon l'invention se caractérise en ce que l'étape de recherche consiste en la recherche d'une clé au sein d'un arbre binaire de type PHT dont les étiquettes des noeuds sont distribuées au sein de la table de hachage distribuée.
   Cette clé contient au moins l'identifiant de service et la recherche consiste à rechercher les informations de localisation dans tout ou partie des feuilles dont l'étiquette est préfixe de l'identifiant de service.

Ce client de communication peut être un terminal de communication.
Par ailleurs, les étiquettes et les clés peuvent être des mots binaires. Les étiquettes peuvent être formées de sorte que le poids de chaque bit dans l'ordre décroissant correspond à une profondeur croissante au sein de l'arbre binaire.
Les services peuvent être des services STUN et/ou TURN et/ou conformes au RFC 3489bis de l'IETF.
Le noeud fournissant le service peut notamment être un des noeuds de la table de hachage distribuée.

Les étiquettes peuvent être composées au moins de l'identifiant de service, d'une indication du protocole de transport, d'une information de localisation et d'un port. L'information de localisation peut être une adresse I P.

Les étiquettes peuvent également comporter tout ou partie des paramètres définissant un identifiant universel de ressources URI conforme au RFC 1630 de l'IETF.

L'invention a également comme objet un programme d'ordinateur adapté pour réaliser un tel procédé, lorsqu'il est mis en oeuvre sur un équipement de traitement de l'information. Cet équipement peut notamment être un système réparti, tel un réseau de communication. Dans une telle situation, différentes étapes du procédé peuvent être mises en oeuvre par des modules logiciels différents distribués sur des équipements physiques différents.
L'invention a également pour objet un support informatique contenant un tel programme d'ordinateur. Ce support peut-être un moyen de mémorisation optique tel un CD-ROM ou un DVD-ROM. Il peut aussi s'agir d'un disque dur et donc d'un serveur à partir duquel le programme d'ordinateur est susceptible d'être téléchargé.

L'invention et ses avantages apparaîtront de façon plus claire dans la description qui va suivre en liaison avec les figures annexées.
La figure 1, précédemment commentée, schématise une table de hachage distribuée.
La figure 2 illustre une architecture possible conforme à l'invention.
La figure 3 schématise un exemple d'arbre binaire PHT.
La figure 4 illustre une application de l'invention à la localisation d'un serveur STUN au sein d'un réseau de communication.

L'architecture illustrée par la figure 2 représente une mise en oeuvre possible de l'invention. Un réseau de communication NET comporte une table de hachage distribuée DHT composée d'un ensemble de noeuds X₁, X₂, X₃... X_{N}. De façon connue en soi, le nombre de ces noeuds peut être dynamique : ils peuvent en effet dynamiquement se retirer de la table de hachage distribuée et s'y rajouter. La table de hachage distribuée dispose des moyens algorithmiques pour gérer ce dynamisme en redistribuant les informations au sein des noeuds la composant.
Des éléments de réseau peuvent être connectés au réseau de communication NET et accéder à la table de hachage distribuée DHT. Sur la figure, la connexion est directe entre l'élément de réseau T et la table de hachage distribuée DHT, mais dans la pratique, différents types d'équipements de réseau peuvent se trouver entre ces deux équipements : des translateurs d'adresses NAT (pour *« Network Address Translators* »), des contrôleurs de session de bord SBC (pour « Session *Border Controller* »), des Proxy SI P etc.
L'élément de réseau T peut être un client de communication, notamment un client de communication adapté pour communiquer avec le réseau de communication NET par le protocole SIP. On entend par client de communication tout équipement adapté pour émettre des requêtes, notamment des requêtes SIP.
Il peut s'agir notamment d'un terminal de communication, interagissant avec un utilisateur humain.

Ces éléments de réseau peuvent émettre des requêtes en localisation de service R, contenant au moins un identifiant ID d'un service recherché. Comme évoqué précédemment ce service peut être un service STUN, TURN ou ICE, un relais média, un service de présence, etc.
Dans la mesure où le RFC 3489bis de l'IETF tend à faire converger les services STUN et TURN en un service unique, le service recherché peut également être un tel service « unifié ».

La table de hachage distribuée est adaptée pour recevoir ces requêtes en localisation. Ces moyens de réceptions peuvent être distribués sur l'ensemble des noeuds, ou sur certains d'entre eux uniquement.
Les requêtes en localisation de services sont reçues de la part de l'élément de réseau, mais elles peuvent transiter par des équipements intermédiaires. Éventuellement, certains de ces équipements intermédiaires peuvent interpréter le contenu des requêtes en localisation de service et modifier certains champs, y compris déterminer une valeur finale à l'identifiant de service.

La table de hachage distribuée DHT dispose alors des moyens pour rechercher les informations de localisation associées à cet identifiant de service ID. Ces informations de localisation peuvent correspondre à un ou plusieurs noeud de la table de hachage distribuée DHT fournissant le service en question. Il peut par exemple s'agir de l'adresse IP (« *Internet Protocol* ») de ces noeuds.
Dans une variante, les informations de localisation peuvent correspondre à des noeuds extérieurs à la table de hachage distribuée DHT. Celle-ci sert de moyens de localisation, et le noeud (ou serveur) extérieur l'utilise pour s'enregistrer comme fournisseur de service, et être accessible par les demandeurs de service.

Ces informations de localisation peuvent alors être renvoyées à l'élément de réseau demandeur T.

Selon l'invention, la table de hachage distribuée est caractérisé en ce qu'elle est organisée de sorte que les informations de localisation sont associées à des clés contenant au moins un identifiant de service correspondant à des feuilles d'un arbre binaire de type PHT, ou table de hachage de préfixes).

Un arbre binaire PHT a été décrit dans l'article « Prefix Hash Tree - An Indexing Data Structure over Distributed Hash Tables » de Sriram Ramabhadran, Sylvia Ratnasamy, Joseph M. Hellerstein et Scott Shenker, Technical Report, Berkeley Intel Research, Février 2004.
Il s'agit d'une structure déployée au-dessus d'une table de hachage distribuée afin de permettre des requêtes d'intervalles. Il appartient à la plus vaste catégorie des « Trie ». Il s'agit donc d'une structure de données formant un arbre ordonné utilisé pour mémoriser une table d'association, dont les clés sont des chaines. Une définition plus complète d'un « Trie » peut être par exemple trouvée dans l'ouvrage de Donald Knuth, The Art of Computer Programming, volume 3: Sorting and Searching. Troisième édition, Addison-Wesley, 1997, pages 492-512.

Dans le cas d'un PHT, les chaînes sont des chaînes binaires.

Dans un PHT, normalement, les étiquettes des noeuds ne sont pas mémorisées au sein des noeuds mais peuvent être déduites de la position des noeuds au sein de l'arbre.

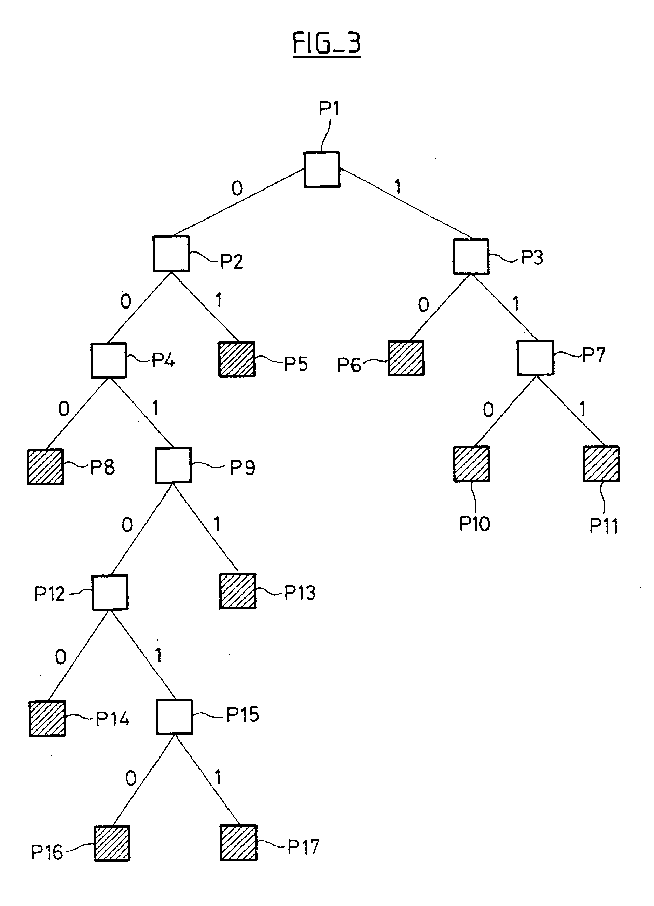

La figure 3 schématise un PHT.
Chaque noeud possède soit deux noeuds « fils » soit aucun. Dans ce dernier cas, il est appelé « feuille » de l'arbre binaire. Sur la figure, les noeuds p5, p6, p8, p10, p11, p13, p14, p16, p17 sont des feuilles.

Cette propriété garantie que les feuilles de l'arbre binaire PHT forment un ensemble de préfixes universels : pour chaque clé, il y a uniquement une feuille dont l'étiquette est un préfixe de cette clé.

Lorsqu'un noeud n'est pas une feuille, chacun de ses deux fils lui est relié par une branche qui a une valeur binaire, c'est-à-dire soit une valeur « 0 » (branches de gauche, sur la figure), soit une valeur « 1 » (branche de droite, sur la figure).
La concaténation des valeurs des branches qui partent de la racine p1 et vont vers une feuille donne l'étiquette de cette feuille. Par exemple, la feuille p14 a pour étiquette « 00100 » ; la feuille p10 a pour étiquette « 110 », etc.
L'étiquetage peut donc être vu comme un procédé récursif : si l'étiquette d'un noeud est 1, ces noeuds fils gauche et droit seront respectivement « 10 » et « I1 ».

Les clés sont mémorisées au sein des feuilles de l'arbre binaire PHT, en fonction de l'étiquette de ces feuilles. Plus précisément, une clé K est mémorisée dans une feuille dont l'étiquette est un préfixe de la clé K.

Le tableau suivant donne un exemple, tiré de l'article mentionné ci-dessus, de correspondance entre des clés et les feuilles correspondants pour l'exemple de la figure 3.

| Feuilles | Étiquettes | Clés |
|---|---|---|
| P8 | 000 | 000001 000100 000101 |
| P14 | 00100 | 001001 |
| P16 | 001010 | 001010 |
| P17 | 001011 | 001011 |
| P13 | 0011 | |
| P5 | 01 | 010000 010101 |
| P6 | 10 | 100010 101011 101111 |
| P10 | 110 | 110000 110010 110011 110110 |
| P11 | 111 | 111000 111010 |

Pour la construction de l'arbre binaire PHT, deux règles sont utilisées :
- Chaque feuille contient un nombre limité de clés. Ce nombre maximal est noté B par la suite.
- Chaque noeud interne contient au plus B+1 1 dans son sous-arbre.

En conséquence de ces deux règles, si une feuille est amenée à contenir davantage de clés que la limite B, alors, elle devient un noeud interne et on crée deux nouvelles feuilles, fille de celle-ci. Ses clés sont réparties parmi les deux feuilles filles.
Par exemple, si un nombre suffisamment important de clés est ajouté à la feuille p11, deux nouvelles feuilles sont créés à partir de p11 : une feuille gauche p11a ayant pour étiquette « 1110 » et une feuille droite p11b ayant pour étiquette « 1111 ». Le noeud p11 devient alors un noeud interne.

Inversement, si un noeud interne ne possède pas suffisamment de clés dans son sous-arbre, alors des feuilles de sous-arbre sont fusionnées avec leur noeud interne parent.
Par exemple si les feuilles p10 et p11 ne contiennent plus suffisamment de clés, elles disparaissent et leurs clés sont mémorisées dans le noeud p7 qui devient alors une feuille.

En outre, chaque clé apparaît de façon unique dans les associations entre clé et feuilles. Si une même feuille peut contenir plusieurs clés (ainsi qu'indiqué sur le tableau donné en exemple), une même clé n'est attribué qu'à une seule feuille.

Par ailleurs, dans un but d'optimisation de la structure de données, chaque feuille de l'arbre binaire peut posséder un pointeur vers les feuilles situées immédiatement à sa droite et à sa gauche. Par exemple, donc, la feuille p6 possède des pointeurs vers les feuilles p5 et p10 ; la feuille p13 possède des pointeurs vers les feuilles p5 et p17.

Comme dit précédemment, un tel arbre binaire est construit « au-dessus » d'une table de hachage distribuée DHT.
Il existe différentes implémentations possibles d'une table de hachage distribuée.
La figure 1 illustre un exemple simplifié pour la facilité de compréhension, mais l'invention ne saurait être comprise comme se limitant à cette mise en oeuvre particulière.
L'ensemble des noeuds X₁, X₂, X₃.... X_{N} de la table de hachage DHT joue le même rôle. Afin de mémoriser ou de récupérer une valeur dans cette table (ou réseau), on s'adresse indifféremment à l'un de ces noeuds.
Dans l'exemple de la figure 1, précédemment commentée, un équipement E interroge le noeud X₃, en lui fournissant une adresse logique.
Celui-ci calcule une fonction de hachage H sur cette adresse logique fournie.
Une fonction de hachage est une fonction qui permet la conversion d'une valeur appartenant à un ensemble de taille importante (l'ensemble des adresses logiques possibles) en une seconde valeur appartenant à un ensemble de taille plus réduite. Cette seconde valeur est ici un nombre entier compris entre 1 et N où N est le nombre de noeuds dans la table de hachage distribuée DHT.

La fonction de hachage H doit généralement respecter la propriété mathématique suivante : H(x) ≠ H(y) ⇒ x ≠ y
En outre, si x = y alors il faut que la probabilité soit importante que H(x)=H(y).
La fonction H est idéalement adaptée pour obtenir une répartition uniforme des clés dans l'espace d'adressage. Cette distribution tend vers l'uniformité avec un grand nombre de clés.

La valeur i retournée par la fonction de hachage permet au noeud X₃ de déduire que le noeud Xᵢ est probablement celui qui possède l'association entre l'adresse logique reçue et le domaine correspondant. Il transmet la requête vers ce noeud Xᵢ. Si celui-ci possède effectivement l'association, il peut retourner le domaine associé à l'adresse logique. Sinon, il peut transmettre la requête à un autre noeud (voisin) qui est susceptible de posséder l'association.
De façon itérative, l'algorithme converge de proche en proche vers le noeud qui possède effectivement l'association.

Le principe de la mémorisation d'une nouvelle association est similaire. Un noeud quelconque du réseau poste à poste DHT reçoit une requête en mémorisation et calcule une valeur à partir de la fonction de hachage et l'adresse logique.
Cette valeur détermine un noeud particulier de l'ensemble des noeuds de la table de hachage distribuée DHT, vers lequel le premier noeud retransmet la requête en mémorisation. Le noeud ainsi désigné mémorise l'association.

Dans la situation de l'invention où un arbre binaire PHT est utilisé, les étiquettes des noeuds de l'arbre binaire PHT sont distribuées au sein de la table de hachage DHT. Concrètement, pour mémoriser une étiquette, on applique la fonction de hachage H sur cette étiquette, et on mémorise le noeud de l'arbre binaire sur le noeud de la table de hachage déterminée par la valeur retournée par la fonction de hachage H.

Selon l'invention, les clés contiennent au moins un identifiant de service et sont associées à une information de localisation. Par exemple elles contiennent une adresse physique, un couple adresse IP/port etc.

Les clés peuvent également contenir d'autres informations comme le protocole de transport à utiliser, par exemple.
La structure d'une clé peut être la suivante :

| | | | |
|---|---|---|---|
| Identifiant de service | transport | Adresse IP | Port |

Cette clé peut par exemple être codée sur 72 bits dans le cas d'une adresse IPv4. L'identifiant de service est codé sur 16 bits, le protocole de transport sur 8 bits, l'adresse IPv4 sur 32 bits et le port sur 16 bits.
L'indication du protocole de transport utilise typiquement une valeur définie par l'IANA (*Internet Assigned Numbers Authority).*
Dans le cas d'une adresse IPv6, celle-ci est codée sur 128 bits.

D'autres champs peuvent bien sûr être ajoutés, sans sortir du cadre de la présente invention.
Par exemple, tout ou partie des paramètres définissant un identifiant universel de ressources URI (pour « *Universal Resource Identifier* ») conforme au RFC 1630 de l'IETF, peuvent être ajoutés dans la structure de la clé, et dans l'étiquette.
Ainsi, l'invention présente l'avantage supplémentaire de permettre d'intégrer la totalité (ou un sous-ensemble) des paramètres d'une URI selon le RFC 1630 ; ce qui n'aurait pas été possible dans une approche poste-à-poste « classique », telle que celles mentionnées précédemment, puisque les indices utilisées dans un réseau poste-à-poste sont des nombres binaires et qu'une URI est une chaîne ASCII. Par l'utilisation de l'arbre binaire PHT, l'invention permet d'utiliser l'ensemble (si besoin) des paramètres ASCII d'une URI.

Les clés correspondent aux feuilles de l'arbre binaire PHT.
Plus précisément, comme décrit précédemment, chaque clé est mémorisée dans la feuille dont l'étiquette est un préfixe de la clé.

Les étiquettes (de taille plus réduite, en général, que les clés) sont distribuées, ainsi qu'explicité plus haut dans les noeuds de la table de hachage distribuée.

Nous avons vu également précédemment que la table de hachage distribuée DHT est adaptée pour recevoir des requêtes en localisation. Ces requêtes contiennent au moins un identifiant de service.
Elle dispose en outre de moyens de recherche pour recherche une ou plusieurs information de localisation fournissant le service déterminé par cet identifiant de service.
Pour ce faire, les moyens de recherche sont adaptés pour rechercher au sein de l'arbre binaire PHT les clés contenues dans la ou les feuilles dont l'étiquette correspond à l'identifiant de service.
Plusieurs méthodes de recherche sont possibles. Certaines sont explicitées dans l'article de Sriram Ramabhadan, Sylvia Ratnasamy, Joseph M. Hellerstein et Scott Shenker précédemment cité.

Par exemple, si la requête contient l'identifiant d'un service « STUN », les moyens de recherche peuvent rechercher un noeud fournissant ce service STUN, ou bien plusieurs noeuds le fournissant, ou bien l'ensemble des noeuds le fournissant. Autrement dit, si plusieurs noeuds « STUN 1 », « STUN 2 », « STUN 3 »... fournisse le même service, il n'est pas nécessaire pour l'émetteur de la requête de préciser de quel noeud il souhaite l'adresse. Le mécanisme est transparent, et il n'a pas même besoin de connaître le nombre de noeuds fournissant le service demandé.
Notamment grâce à l'utilisation des pointeurs entre feuilles voisines, il est possible d'aisément effectuer des recherches d'intervalles. Aussi, la requête en localisation peut contenir un identifiant de service comme « STUN » sans préciser s'il s'agit de « STUN 1 », « STUN 2 » etc. Les moyens de recherche sont alors à même de retrouver tout ou partie des feuilles correspondantes.
Le nombre de réponses que la table de hachage distribuée doit rechercher peut être spécifié dans la requête en localisation, par exemple si l'émetteur ne souhaite que N noeuds fournissant le service ou bien l'ensemble des noeuds fournissant le service.

Les clés mémorisées au sein des feuilles trouvées par la recherche contiennent des informations de localisation, correspondant aux noeuds de la table de hachage distribuée fournissant le service demandé. Comme vu précédemment, il peut s'agir de champs binaires de poids faible de la clé.

Ces informations de localisation sont retournées à l'émetteur de la requête en localisation. Il peut alors les utiliser pour contacter le ou les noeuds de la table de hachage distribuée DHT.

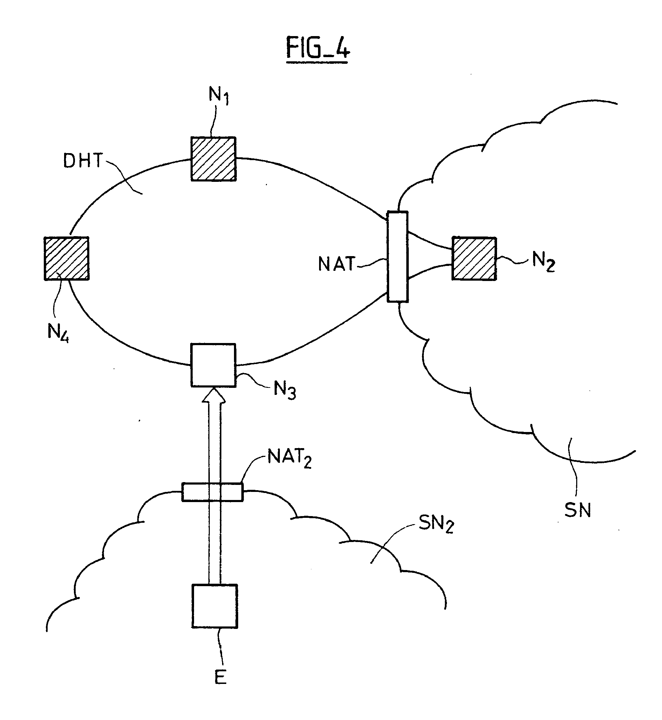

La figure 4 montre un exemple d'application de l'invention pour la localisation d'un service STUN au sein d'un réseau de communication.
Quatre équipements N₁, N₂, N₃, N₄ sont connectées au sein d'une table de hachage distribuée DHT. Un sous-réseau SN « isole » le noeud N₂ des autres noeuds N₁, N₃ et N₄. Un dispositif de traduction d'adresses NAT (pour « *Network Address Translator »* en langue anglaise) interconnecte ce sous-réseau SN du reste du réseau de communication.

Certains de ces noeuds fournissent le service STUN, et sont représentés par des hachures sur la figure. Il s'agit des noeuds N₁, N₂ et N₄.
Pour pouvoir produire les résultats et la fonction escomptée, un service STUN doit se situer dans l'espace public du réseau de communication. Il ne doit pas être dans un sous-réseau isolé de l'espace public par un dispositif NAT. Le fait seul que l'équipement demandeur du service se sache lui-même dans un sous-réseau privé ne suffit pas pour conclure que le service STUN situé de l'autre coté d'un dispositif NAT est automatiquement dans l'espace public, car les sous-réseaux peuvent être imbriqués les uns dans les autres.

Pour résoudre ce problème, un noeud dont il est assuré qu'il appartient à l'espace public est initialement défini comme fournisseur du service STUN. Il joue le rôle d'amorce (ou « *bootstrap »* en langue anglaise).
Sur la figure 1, il s'agit du noeud N₁.
Cette désignation initiale peut être effectuée manuellement ou bien par un mécanisme automatique extérieur à l'invention.

Chaque noeud de la table de hachage distribuée DHT qui comporte la fonction STUN peut alors se tester lui-même, via le mécanisme STUN, afin de savoir s'il est dans l'espace public ou derrière un dispositif NAT.

Pour ce faire, de façon connue en soi, le noeud N₄, par exemple, transmet une requête STUN au noeud N₁. Celui lui retourne l'adresse IP sous lequel il le voit. Comme aucun dispositif NAT ne se trouve entre les deux noeuds, l'adresse perçue par le noeud N₁ est l'adresse « réelle » du noeud N₄. Ce dernier peut donc déterminer qu'il est dans l'espace public et s'ajouter dans la table de hachage distribuée DHT comme fournisseur du service STUN.
Le noeud N₂ peut procéder de même avec un des noeuds fournissant le service STUN, c'est-à-dire soit le noeud N₁, soit le noeud N₄.

Mais cette fois-ci, le noeud interrogé lui renvoie une adresse différente de celle connue du noeud N₂. Il peut alors en conclure qu'il se situe dans un sous-réseau SN, séparé du domaine public par un dispositif NAT.

Il ne se rajoute alors pas dans la liste des noeuds fournissant le service STUN.

L'ajout dans la liste des noeuds se fait selon ce qui a été décrit précédemment. Une clé est tout d'abord construite à partir de l'identifiant du service STUN et d'une information de localisation, par exemple son adresse IP et le port. La clé est alors mémorisée au sein d'un arbre binaire de type PHT, dont les étiquettes sont distribuées au sein de la table de hachage distribuée DHT.

Un équipement E situé dans un sous réseau SN2, et derrière un équipement de traduction d'adresses NAT2 veut accéder à un service STUN. Pour ce faire, il transmet une requête en localisation à la table de hachage DHT. Comme précédemment expliquée, celle-ci recherche alors au sein des informations mémorisées et lui retourne soit les deux adresses de N₁ et N₄, soit simplement l'une d'entre elle.
L'équipement E peut alors s'adresser à un noeud particulier de cette table de hachage distribuée pour obtenir le service STUN

## Revendications

1. Réseau de communication (NET) comportant une table de hachage distribuée (DHT) dont les noeuds (X₁, X₂, X₃... X_{N}) fournissent des services accessibles à des clients de communication adaptés communiquer selon le protocole SIP (T) connectés audit réseau de télécommunication, ladite table de hachage distribuée disposant :
- de moyens pour recevoir une requête en localisation de service (R) de la part d'un client de communication (T), ladite requête contenant au moins un identifiant d'un service (ID), et
- des moyens de recherche pour rechercher au sein de ladite table de hachage au moins une information de localisation, chacune correspondant à un noeud fournissant le service déterminé par ledit identifiant de service, et la ou les transmettre audit client de communication,
**caractérisé en ce que** ladite table de hachage est organisée de sorte que les informations de localisations sont associées à des clés contenant au moins un identifiant de service et correspondant à des feuilles d'un arbre binaire de type PHT dont les étiquettes des noeuds sont distribuées au sein de ladite table de hachage distribuée, et
**en ce que** les moyens de recherche sont adaptés pour rechercher les informations de localisation dans tout ou partie des feuilles dont l'étiquette est préfixe de l'identifiant de service contenu dans ladite requête de service, et les transmettre audit client de communication.

2. Réseau de communication selon la revendication précédente, dans lequel ledit client de communication est un terminal de communication.

3. Réseau de communication selon l'une des revendications précédentes dans lequel lesdites étiquettes et lesdites clés sont des mots binaires, lesdites étiquettes étant formées de sorte que le poids de chaque bit dans l'ordre décroissant correspond à une profondeur croissante au sein dudit arbre binaire.

4. Réseau de communication selon l'une des revendications précédentes, dans lequel lesdits services sont des services STUN et/ou TURN et/ou conformes au RFC 3489bis de l'IETF.

5. Réseau de communication selon l'une des revendications précédentes dans lequel ledit noeud est un des noeuds (X₁, X₂, X₃... X_{N}) de ladite table de hachage distribuée (DHT)

6. Réseau de communication selon l'une des revendications précédentes, dans lequel lesdites étiquettes sont composées au moins dudit identifiant de service, d'une indication du protocole de transport, d'une servive, d'une indication du protocole de transport, d'une information de localisation, telle une adresse IP et d'un port.

7. Réseau de communication selon la revendication précédente dans lequel lesdites étiquettes comportent en outre tout ou partie des paramètres définissant un identifiant universel de ressources URI conforme au RFC 1630 de l'IETF.

8. Procédé permettant à un client de communication (E) adapté pour communiquer selon le protocole SIP d'accéder au service fourni par une table de hachage distribuée (DHT) comportant une étape de transmission d'une requête en localisation de service, ladite requête contenant un identifiant dudit service ; et une étape de recherche par ladite table de hachage distribuée d'au moins une information de localisation chacune correspondant à un noeud fournissant lédit service
**caractérisé en ce que** l'étape de recherche consiste en la recherche d'une clé au sein d'un arbre binaire de type PHT dont les étiquettes des noeuds sont distribuées au sein de ladite table de hachage distribuée, ladite clé contenant au moins ledit identifiant, la recherche consistant à rechercher les informations de localisation dans tout ou partie des feuilles dont l'étiquette est préfixe dudit identifiant de service.

9. Procédé selon la revendication précédente, dans lequel ledit client de communication est un terminal de communication.

10. Procédé selon l'une des revendications 8 ou 9, dans lequel lesdites étiquettes et lesdites clés sont de mots binaires, lesdites étiquettes étant formées de sorte que le poids de chaque bit dans l'ordre décroissant correspond à une profondeur croissante au sein dudit arbre binaire.

11. Procédé selon l'une de revendications 8 à 10, dans lequel lesdits services sont des services STUN et/ou TURN et/ou conformes au RFC 3489bis de l'IETF.

12. Procédé selon l'une des revendications 8 à 11, dans lequel ledit noeud est un des noeuds (X₁, X₂, X₃... X_{N}) de ladite table de hachage distribuée (DHT).

13. Procédé selon l'une des revendications 8 à 12 dans lequel lesdites étiquettes sont composées au moins dudit identifiant de service, d'une indication du protocole de transport, d'une information de localisation, telle une addresse IP et d'un port_{.}

14. Procédé selon la revendication précédente dans lequel lesdites étiquettes comportent en outre tout ou partie des paramètres définissant un identifiant universel de ressources URI conforme RFC 1630 de l'IETF.

15. Programme d'ordinateur adapté pour réaliser le procédé selon l'une des revendications 8 à 14, lorsqu'il est mis en oeuvre sur un équipement de traitement de l'information.

16. Support informatique contenant un programme d'ordinateur selon la revendication 15.

## Claims

1. A communication network (NET) comprising a distributed hash table (DHT) whose nodes (X₁, X₂, X₃...X_{N}) provide services accessible to communication clients adapted to communicate using the SIP protocol (T) connected to said telecommunication network, said distributed hash table having:
- means for receiving a service-location request (R) from a communication client (T), said request containing at least one identifier of a service (ID), and
- search means for searching within said hash table for at least one piece of location information, each one corresponding with a node that provides the service determined by said service identifier, and transmitting it or them to said communication client,
**characterized in that** said hash table is organized so that the location information is associated with keys containing at least one service identifier and corresponding to leaves of a PHT binary tree whose nodes' labels are distributed within said distributed hash table, and
**in that** the search means are adapted to search for location information in all or some of the leaves of which the label is the prefix of the service identifier contained within said service request, and of transmitting them to said communication client.

2. A communication network according to the preceding claim, wherein said communication client is a communication terminal.

3. A communication network according to one of the preceding claims, wherein said labels and said keys are binary words, said labels being formed so that the weight of each bit in increasing order corresponds to an increasing depth within said binary tree.

4. A communication network according to one of the preceding claims, wherein said services are STUN services and/or TURN services and/or compliant with the IETF's RFC 3489bis.

5. A communication network according to one of the preceding claims, wherein said node is one of the nodes (X₁, X₂, X₃...X_{N}) of said distributed hash table (DHT).

6. A communication network according to one of the preceding claims, wherein said labels are composed at least of said service identifier, an indication of the transport protocol, a piece of location information, such as an IP address, and a port.

7. A communication network according to the preceding claim, wherein said labels further comprise all or some of the parameters that define a universal resource identifier URI compliant with the IETF's RFC 1630.

8. A method enabling a communication client (E) adapted to communicate according to the SIP protocol to access a service provided by a distributed hash table (DHT) comprising a step of transmitting a service location request, said request containing an identifier of said service; and a step of searching via said distributed hash table for at least one piece of location information, each one corresponding to a node providing said service **characterized in that** the step of searching consists of searching for a key within a PHT binary tree whose nodes' labels are distributed within said distributed hash table, said key containing at least said identifier, the search consisting of searching for location information in all or some of the leaves of which the label is the prefix of said service identifier.

9. A method according to the preceding claim, wherein said communication client is a communication terminal.

10. A method according to one of the claims 8 or 9, wherein said labels and said keys are binary words, said labels being formed so that the weight of each bit in increasing order corresponds to an increasing depth within said binary tree.

11. A method according to one of the claims 8 to 10, wherein said services are STUN services and/or TURN services and/or compliant with the IETF's RFC 3489bis.

12. A method according to one of the claims 8 to 11, wherein said node is one of the nodes s (X₁, X₂, X₃...X_{N}) of said distributed hash table (DHT).

13. A method according to one of the claims 8 to 12, wherein said labels are composed at least of said service identifier, an indication of the transport protocol, a piece of location information, such as an IP address and a port.

14. A method according to the preceding claim, wherein said labels further comprise all or some of the parameters that define a universal resource identifier URI compliant with the IETF's RFC 1630.

15. A computer program adapted to carry out the method according to one of the claims 8 to 14, whenever it is implemented on an information processing device.

16. A computer medium containing a computer program according to claim 15.

## Patentansprüche

1. Kommunikationsnetzwerk (NET), umfassend eine verteilte Hash-Tabelle (DHT), deren Knoten (X₁, X₂, X₃...X_{N}) Dienste bereitstellen, die für an das besagte Telekommunikationsnetzwerk angeschlossene Kommunikations-Clients, welche für das Kommunizieren gemäß dem SIP-Protokoll (T) ausgelegt sind, zugänglich sind, wobei die besagte verteilte Hash-Tabelle aufweist:
- Mittel für den Empfang einer Dienstlokalisierungsanforderung (R) von einem Kommunikations-Client (T), wobei die besagte Anforderung mindestens eine Kennung eines Dienstes (ID) enthält, und
- Suchmittel zum Suchen mindestens einer Lokalisierungsinformation innerhalb der besagten Hash-Tabelle, wobei jede Lokalisierungsinformation einem Knoten, welcher den von der besagten Dienstkennung bestimmten Dienst bereitstellt, entspricht, und zum Übertragen der besagten Lokalisierungsinformation(en) an den besagten Kommunikations-Client,
**dadurch gekennzeichnet, dass** die besagte Hash-Tabelle derart organisiert ist, dass die Lokalisierungsinformationen Schlüsseln zugeordnet sind, welche mindestens eine Dienstkennung enthalten und Blättern eines binären Baums vom Typ PHT entsprechen, deren Knotenetiketten innerhalb der besagten verteilten Hash-Tabelle verteilt sind, und
dass die Suchmittel dazu ausgelegt sind, die Lokalisierungsinformationen in allen Blättern oder in einem Teil der Blätter, deren Etikett das Präfix der in der besagten Dienstanforderung enthaltenden Dienstkennung ist, zu suchen und an den besagten Kommunikations-Client zu übertragen.

2. Kommunikationsnetzwerk nach dem vorstehenden Anspruch, wobei der besagte Kommunikations-Client ein Kommunikationsendgerät ist.

3. Kommunikationsnetzwerk nach einem der vorstehenden Ansprüche, wobei die besagten Etiketten und die besagten Schlüssel binäre Wörter sind, wobei die besagten Etiketten derart ausgebildet sind, dass das Gewicht eines jeden Bits in absteigender Reihenfolge einer zunehmenden Tiefe innerhalb des besagten binären Baums entspricht.

4. Kommunikationsnetzwerk nach einem der vorstehenden Ansprüche, wobei die besagten Dienste STUN- und/oder TURN-Dienste sind und/oder der RFC 3489bis der IETF entsprechen.

5. Kommunikationsnetzwerk nach einem der vorstehenden Ansprüche, wobei der besagte Knoten einer der Knoten (X₁, X₂, X₃...X_{N}) der besagten verteilten Hash-Tabelle (DHT) ist:

6. Kommunikationsnetzwerk nach einem der vorstehenden Ansprüche, wobei sich die besagten Etiketten mindestens aus der besagten Dienstkennung, einer Angabe des Transportprotokolls, einer Lokalisierungsinformation, wie beispielsweise eine IP-Adresse, und einem Port zusammensetzen.

7. Kommunikationsnetzwerk nach dem vorstehenden Anspruch, wobei die besagten Etiketten weiterhin alle oder einen Teil der Parameter, welche eine einheitliche Ressourcenkennung URI gemäß der RFC 1630 der IETF definieren, enthalten.

8. Verfahren, welches es einem Kommunikations-Client (E), der für das Kommunizieren gemäß dem SIP-Protokoll ausgelegt ist, ermöglicht, auf einen von einer verteilten Hash-Tabelle (DHT) bereitgestellten Dienst zuzugreifen, wobei das Verfahren einen Schritt des Übertragens einer Dienstlokalisierungsanforderung, welche eine Kennung des besagten Dienstes enthält, und einen Schritt des Suchens, durch die besagte verteilte Hash-Tabelle, mindestens einer Lokalisierungsinformation umfasst, wobei jede Lokalisierungsinformation einem Knoten, der den besagten Dienst bereitstellt, entspricht,
**dadurch gekennzeichnet, dass** der Schritt des Suchens darin besteht, einen Schlüssel innerhalb eines binären Baums vom Typ PHT, dessen Knotenetiketten innerhalb der besagten verteilten Hash-Tabelle verteilt sind, zu suchen, wobei der besagte Schlüssel mindestens die besagte Kennung enthält, wobei die Suche darin besteht, die Lokalisierungsinformationen in allen oder in einem Teil der Blätter, deren Etikett das Präfix der besagten Dienstkennung ist, zu suchen.

9. Verfahren nach dem vorstehenden Anspruch, wobei der besagte Kommunikations-Client ein Kommunikationsendgerät ist.

10. Verfahren nach einem der Ansprüche 8 oder 9, wobei die besagten Etiketten und die besagten Schlüssel binäre Wörter sind, wobei die besagten Etiketten derart ausgebildet sind, dass das Gewicht eines jeden Bits in absteigender Reihenfolge einer zunehmenden Tiefe innerhalb des besagten binären Baums entspricht.

11. Verfahren nach einem der Ansprüche 8 bis 10, wobei die besagten Dienste STUN- und/oder TURN-Dienste sind und/oder der RFC 3489bis der IETF entsprechen.

12. Verfahren nach einem der Ansprüche 8 bis 11, wobei der besagte Knoten einer der Knoten (X₁, X₂, X₃...X_{N}) der besagten verteilten Hash-Tabelle (DHT) ist.

13. Verfahren nach einem der Ansprüche 8 bis 12, wobei sich die besagten Etiketten mindestens aus der besagten Dienstkennung, einer Angabe des Transportprotokolls, einer Lokalisierungsinformation, wie beispielsweise eine IP-Adresse, und einem Port zusammensetzen.

14. Verfahren nach dem vorstehenden Anspruch, wobei die besagten Etiketten weiterhin alle oder einen Teil der Parameter, welche eine einheitliche Ressourcenkennung URI gemäß der RFC 1630 der IETF definierten, enthalten.

15. Computerprogramm, dazu ausgelegt, das Verfahren nach einem der Ansprüche 8 bis 14 durchzuführen, wenn es auf einer Informationsverarbeitungsvorrichtung läuft.

16. Datenträger, welcher ein Computerprogramm gemäß Anspruch 15 enthält.
